# EUROPÄISCHE PATENTSCHRIFT

(11) **EP 0 716 919 B1**
(45) Veröffentlichungstag und Bekanntmachung des Hinweises auf die Patenterteilung: **12.06.2002**
(21) Anmeldenummer: 95119063.6
(22) Anmeldetag: 04.12.1995
(51) Int. Cl.: B32B 27/36, C08K 5/00, B29C 47/06

(54) **UV-geschütze, mehrschichtige Polycarbonatplatten**
UV-protected multilayered panels
Panneaux multicouches à base de polycarbonate protégés contre le rayonnement UV

(30) Priorität: 16.12.1994 DE 4444868
(43) Veröffentlichungstag der Anmeldung: 19.06.1996
(73) Patentinhaber: BAYER AG, 51368 Leverkusen (DE)
(72) Erfinder: Löwer, Hartmut, Dr., D-47802 Krefeld (DE); Anders, Siegfried, Dr., 51147 Köln (DE); Schmid, Helmut, Dr., D-47807 Krefeld (DE); Nising, Wolfgang, Dr., D-53757 St. Augustin (DE)

(56) Entgegenhaltungen:
- EP-A- 0 110 221
- EP-A- 0 320 632
- EP-A- 0 338 355
- EP-A- 0 359 622
- EP-A- 0 569 878
- EP-A- 0 599 208
- EP-A- 0 683 192
- DATABASE WPI Week 9414 Derwent Publications Ltd., London, GB; AN 94-114870 XP002012346 & JP-A-06 064 123 (SUMITOMO DOW LTD.)
- DATABASE WPI Week 9414 Derwent Publications Ltd., London, GB; AN 94-114864 XP002012347 & JP-A-06 064 114 (ASAHI CHEM. IND. CO. LTD.)
- DATABASE WPI Week 9415 Derwent Publications Ltd., London, GB; AN 94-123846 XP002012348 & JP-A-06 071 832 (ASAHI CHEM. IND, CO. LTD.)

## Beschreibung

Gegenstand der vorliegenden Erfindung sind UV-geschützte, mehrschichtige Polycarbonatplatten enthaltend
1. eine Basisplatte aus thermoplastischem Polycarbonat, das keinen oder > 0 Gew.-% bis 1 Gew. -% UV-Absorber enthält und das eine Viskosität bei 280°C und bei einer Schergeschwindigkeit von 100 s⁻¹ von 500 Pa.S bis 2500 Pa.S, vorzugsweise von 750 Pa.S bis 2000 Pa.S aufweist und mindestens auf einer Seite der Basisplatte
2. eine Deckschicht aus thermoplastischem Polycarbonat, das einen Gehalt an UV-Absorber von 2 Gew.-% bis 20 Gew.-%, vorzugsweise von 2 Gew.-% bis 15 Gew.-% und insbesondere von 3 Gew.-% bis 13 Gew.-% enthält und die eine Viskosität bei 280 °C und bei einer Schergeschwindigkeit von 100 s⁻¹ von 200 Pa.S bis 2300 Pa.S, vorzugsweise von 300 Pa.S bis 2000 Pa.S aufweist, die dadurch gekennzeichnet sind, daß die Viskosität der Deckschicht 2 jeweils mindestens 50 Pa.S, vorzugsweise 100 Pa.S bis 2 000 Pa.S geringer ist, als die Viskosität der jeweiligen Basisplatte 1, erhältlich durch Coextrusion, wobei man mit Hilfe eines Coextrusionsadapters die Schmelzstränge des Kernmaterials sowie der Deckschicht zusammenführt und anschließend in einer geschlossenen Düse in die gewünschte Form bringt.

Die Basisplatte 1 kann sowohl auf einer Seite als auch auf beiden Seiten mit der Deckschicht 2 beschichtet sein. Die Dicke der erfindungsgemäßen Polycarbonatplatten ergibt sich aus der Basisplatte von 0,4mm bis 50 mm und mindestens einer UV-absorberhaltigen Deckschicht von 10 µm bis 100 µm.

Auf eine oder beide Deckschichten 2 kann gegebenenfalls eine zusätzliche Schutzschicht 3 aus Polycarbonat mit UV-Absorber-Gehalten von 0,1 Gew.-% bis 20 Gew.-%, mit Viskositäten bei 280 °C und einer Schergeschwindigkeit von 100 s⁻¹ von 200 Pa.S bis 2300 Pa.S, vorzugsweise von 300 Pa.S bis 2000 Pa.S und mit Dicken von 2 µm bis 100 µm in bekannter Weise aufgebracht sein.

Hierbei ist der Unterschied der Viskosität der Schutzschicht 3 zur Deckschicht 2 jeweils von untergeordneter Bedeutung, also beliebig groß. Er kann auch null Pa.S betragen.

Gegenstand der vorliegenden Erfindung sind somit auch mehrschichtige Polycarbonatplatten enthaltend
1. die erfindungsgemäße Basisplatte 1,
2. auf mindestens einer Seite der Basisplatte 1 die erfindungsgemäße Deckschicht 2 und mindestens
3. auf einer von der Basisplatte 1 abgewandten Seite der Deckschicht 2 eine Schutzschicht 3 aus Polycarbonat, die dadurch gekennzeichnet ist, daß sie einen UV-Absorber-Gehalt von 0,1 Gew.-% bis 20 Gew.-%, Viskositäten bei 280 °C und bei einer Schergeschwindigkeit von 100 s⁻¹ von 200 Pa.S bis 2300 Pa.S, vorzugsweise von 300 Pa.S bis 2000 Pa.S und eine Dicke von 2 µm bis 100 µm hat, wobei der Unterschied der Viskosität der Schutzschicht 3 zur Deckschicht 2 jeweils beliebig groß ist oder null Pa.S beträgt, erhältlich durch Coextrusion wobei man mit Hilfe eines Coextrusionsadapters die Schmelzstränge des Kernmaterials sowie der Deckschicht zusammenrührt und anschließend in einer geschlossenen Düse in die gewünschte Form bringt.

Mehrschichtige Kunststofftafeln aus Polycarbonat, die zum zusätzlichen Schutz vor Witterungseinflüssen mit Coexschichten aus hoch UV-absorberhaltigen Kunststoffen ausgerüstet werden, sind bekannt.

JP-A 6064 123 offenbart mehrschichtige Polycarbonatplatten, die jedoch nicht durch Coextrusion, sondern durch Laminierung hergestellt werden. Die Schichten haben verschiedene Viskosität.

EP-A 320 632 offenbart durch Coextrusion hergestellte mehrschichtige Formkörper aus Polycarbonaten. Spezifische Viskositätsunterschiede der verschiedenen Schichten sind nicht offenbart.

EP-A 599 208 offenbart mehrschichtige UV-geschützte Kunststoffplatten oder Folien, wobei die Kernschicht einen Fluoreszenzfarbstoff enthält, so daß hierdurch die Überwachung der Dicke der Deckschichten bei der Herstellung ermöglicht wird. Spezifische Viskositätsunterschiede der verschiedenen Schichten sind nicht offenbart.

EP-A 338 355 offenbart verschmutzungsbeständige Polycarbonatplatten mit mehrschichtigem Aufbau. Spezifische Viskositätsunterschiede der verschiedenen Schichten sind nicht offenbart.

So beschreibt EP 110 221 coextrudierte, mehrschichtige Kunststofftafeln aus Polycarbonat mit mindestens einer Deckschicht aus UV-absorberhaltigen Polycarbonat.

EP 110 238 beschreibt coextrudierte, mehrschichtige Kunststofftafeln aus Polycarbonat, die zusätzlich zu einer Schicht aus UV-absorberhaltigen Polycarbonat eine weitere Deckschicht aus Polycarbonat zur Vermeidung von UV-Absorberausdampfung besitzen.

Über die Viskositätsverhältnisse dieser Schichten untereinander und den Zusammenhang zur Oberflächenqualität wird in diesen Patenten nichts gesagt.

In dem technisch-wissenschaftlichen Bericht des IKV Aachen, "Fließprobleme in Mehrschichtströmungen" (Dr. M. Meier, 1990) werden Fließstörungen beschrieben, die auch bei der Coextrusion von witterungsstabilisierten Polycarbonattafeln und -Stegplatten auftreten. Diese sogenannten Schichtgrenzinstabilitäten sind parabelförmige, in Extrusionsrichtung einseitig geschlossene Störungen, die in der Grenzschicht zwischen Basismaterial und UV-Schutzschichtmaterial auftreten (S. 73 ff). Sie führen zu Schlieren in der Platte, die sich auch auf die Qualität der Oberfläche auswirken können. Sie lassen sich hiernach in der Regel dann am besten beherrschen, wenn das Viskositätsverhältnis zwischen Deckschicht und Basisschicht 1 beträgt, beide Materialien also die gleiche Viskosität besitzen. Von Ausnahmen dieser Regel wird berichtet, bei denen selbst Viskositätsgleichheit nicht zu einer einwandfreien Oberfläche führt. Erklärungen für diese Ausnahme oder Anleitungen zur Vermeidung dieser Sonderfälle werden jedoch nicht gegeben.

In dem Artikel "D. Djordjevic, Neue Aspekte bei Mehrlagenverbunden, Neue Verpackung 7 (1978), S. 104 ff", werden die rheologischen Voraussetzungen zur Herstellung von Mehrlagenverbunden mittels Coextrusion beschrieben. Ein wichtiges Kriterium zur Auswahl von Polymeren hierfür ist danach deren ähnliche, rheologische Beschaffenheit.

Zusammenfassend kann aus dieser Literatur als Stand der Technik abgeleitet werden, daß bei der Herstellung von mehrlagigen Verbunden mittels Coextrusion immer dann gute optische Qualitäten erreicht werden, wenn die Viskositäten der verwendeten Materialien gleich sind.

Es wurde aber gefunden, daß dieser Befund für die Herstellung von witterungsstabilen Tafeln und Stegplatten aus Polycarbonat durch Coextrusion mit hoch UV-absorberhaltigen Polycarbonaten als Deckschicht nicht gilt. Wählt man für die Herstellung solcher Platten Materialien mit gleicher Viskosität, so treten immer Schichtgrenzinstabilitäten auf, die nicht nur - wie in der Literatur aufgeführt - parabelförmiges Aussehen haben.

Die Aufgabe bestand daher darin, witterungsstabile Polycarbonatplatten und Stegplatten zu entwickeln, die durch Coextrusion hergestellt werden können, ohne daß Schichtgrenzinstabilitäten auftreten.

Überraschend wurde nun gefunden, daß, entgegen der gängigen Lehre, bei der Coextrusion von Polycarbonat-Tafeln und Stegplatten mit hoch UV-absorberhaltigen Polycarbonatdeckschichten Schichtgrenzinstabilitäten immer dann vermieden werden können, wenn die Viskosität der verwendeten UV-absorberhaltigen Deckschicht eine niedrigere Viskosität hat als das Polycarbonat der Basisschicht.

Gegenstand der vorliegenden Erfindung ist somit auch die Herstellung der erfindungsgemäßen Polycarbonatplatten durch Coextrusion, die dadurch gekennzeichnet ist, daß man in bekannter Weise mit Hilfe eines Coextrusionsadapters die Schmelzestränge des Kernmaterials sowie der Deckschicht oder Deckschichten zusammenführt und anschließend in einer geschlossenen Düse in die gewünschte Form bringt.

Die für die Polycarbonatplatten einzusetzenden thermoplastischen, aromatischen Polycarbonate im Sinne der vorliegenden Erfindung sind sowohl Homopolycarbonate als auch Copolycarbonate; die Polycarbonate können in bekannter Weise linear oder verzweigt sein.

Die Herstellung dieser Ausgangspolycarbonate erfolgt in bekannter Weise aus Diphenolen, Kohlensäurederivaten, gegebenenfalls Kettenabbrechern und gegebenenfalls Verzweigern.

Einzelheiten der Herstellung von Polycarbonaten sind in vielen Patentschriften seit etwa 40 Jahren niedergelegt. Beispielhaft sei hier nur auf "Schnell", Chemistry and Physics of Polycarbonates", Polymer Reviews, Volume 9, Interscience Publishers, New York, London, Sydney 1964, auf D. Freitag, U. Grigo, P.R. Müller, W. Nouvertné, BAYER AG, "Polycarbonates" in Encyclopedia of Polymer Science and Engineering, Volume 11, Second Edition, 1988, Seiten 648-718 und schließlich auf Dres. U. Grigo, K. Kirchner und P.R. Müller "Polycarbonate" in Becker/Braun, Kunststoff-Handbuch, Band 3/1, Polycarbonate, Polyacetale, Polyester, Celluloseester, Carl Hanser Verlag München, Wien 1992, Seiten 117-299 verwiesen.

Für die Herstellung der Polycarbonate geeignete Diphenole sind beispielsweise Hydrochinon, Resorcin, Dihydroxybiphenyle, Bis-(hydroxyphenyl)-alkane, Bis(hydroxyphenyl)-cycloalkane, Bis-(hydroxyphenyl)-sulfide, Bis-(hydroxyphenyl)-ether, Bis-(hydroxyphenyl)-ketone, Bis-(hydroxyphenyl)-sulfone, Bis-(hydroxyphenyl)-sulfoxide, α,α'-Bis-(hydroxyphenyl)-diisopropylbenzole, sowie deren kernalkylierte und kernhalogenierte Verbindungen.

Bevorzugte Diphenole sind 4,4'-Dihydroxydiphenyl, 2,2-Bis-(4-hydroxyphenyl)-propan, 2,4-Bis-(4-hydroxyphenyl)-2-methylbutan, 1,1-Bis-(4-hydroxyphenyl)-p-diisopropylbenzol, 2,2-Bis-(3-methyl-4-hydroxyphenyl)-propan, 2,2-Bis-(3-chlor-4-hydroxyphenyl)-propan, Bis-(3,5-dimethyl-4-hydroxyphenyl)-methan, 2,2-Bis-(3,5-dimethyl-4-hydroxyphenyl)-propan, Bis-(3,5-dimethyl-4-hydroxyphenyl)-sulfon, 2,4-Bis-(3,5-dimethyl-4-hydroxyphenyl)-2-methylbutan, 1,1-Bis-(3,5-dimethyl-4-hydroxyphenyl)-p-diisopropylbenzol, 2,2-Bis-(3,5-dichlor-4-hydroxyphenyl)-propan, 2,2-Bis-(3,5-dibrom-4-hydroxyphenyl)-propan und 1,1-Bis-(4-hydroxyphenyl)-3,3,5-trimethylcyclohexan.

Besonders bevorzugte Diphenole sind 2,2-Bis-(4-hydroxyphenyl)-propan, 2,2-Bis-(3,5-dimethyl-4-hydroxyphenyl)-propan, 2,2-Bis-(3,5-dichlor-4-hydroxyphenyl)-propan, 2,2-Bis-(3,5-dibrom-4-hydroxyphenyl)-propan, 1,1-Bis-(4-hydroxyphenyl)-cyclohexan und 1,1 -Bis-(4-hydroxyphenyl)-3,3,5-trimethylcyclohexan.

Diese und weitere geeignete Diphenole sind z.B. in den US-PS 3 028 635, 2 999 835, 3 148 172, 2 991 273, 3 271 367, 4 982 014 und 2 999 846, in den deutschen Offenlegungsschriften 1 570 703, 2 063 050, 2 036 052, 2 211 956 und 3 832 396, der französischen Patentschrift 1 561 518, in der Monographie "H. Schnell, Chemistry and Physics of Polycarbonates, Interscience Publishers, New York 1964" sowie in den japanischen Offenlegungsschriften 62039/1986, 62040/1986 und 105550/1986 beschrieben.

Im Falle der Homopolycarbonate ist nur ein Diphenol eingesetzt, im Falle der Copolycarbonate sind mehrere Diphenole eingesetzt.

Geeignete Kohlensäurederivate sind beispielsweise Phosgen oder Diphenylcarbonat.

Geeignete Kettenabbrecher sind sowohl Monophenole als auch Monocarbonsäuren. Geeignete Monophenole sind Phenol selbst, Alkylphenole wie Kresole, p-tert.-Butylphenol, p-n-Octylphenol, p-iso-Octylphenol, p-n-Nonylphenol, Cumylphenol und p-iso-Nonylphenol, Halogenphenole wie p-Chlorphenol, 2,4-Dichlorphenol, p-Bromphenol und 2,4,6-Tribromphenol.

Geeignete Monocarbonsäuren sind Benzoesäure, Alkylbenzoesäuren und Halogenbenzoesäuren.

Bevorzugte Kettenabbrecher sind die Phenole der Formel (I) 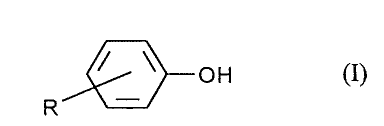 worin
- R: ein verzweigter oder unverzweigter C₈- und/oder C₉-Alkylrest ist.

Die Menge an einzusetzendem Kettenabbrecher beträgt 0,1 Mol-% bis 5 Mol-%, bezogen auf Mole an jeweils eingesetzten Diphenolen. Die Zugabe der Kettenabbrecher kann vor, während oder nach der Phosgenierung erfolgen.

Geeignete Verzweiger sind die in der Polycarbonatchemie bekannten tri- oder mehr als trifunktionellen Verbindungen, insbesondere solche mit drei oder mehr als drei phenolischen OH-Gruppen.

Geeignete Verzweiger sind beispielsweise Phloroglucin, 4,6-Dimethyl-2,4,6-tri-(4-hydroxyphenyl)-hepten-2, 4,6-Dimethyl-2,4,6-tri-(4-hydroxyphenyl)-heptan, 1,3,5-Tri-(4-hydroxyphenyl)-benzol, 1,1,1-Tri-(4-hydroxyphenyl)-ethan, Tri-(4-hydroxyphenyl)-phenylmethan, 2,2-Bis-[4,4-bis-(4-hydroxyphenyl)-cyclohexyl]-propan, 2,4-Bis-(4-hydroxyphenyl-isopropyl)-phenol, 2,6-Bis-(2-hydroxy-5'-methyl-benzyl)-4-methylphenol, 2-(4-Hydroxyphenyl)-2-(2,4-dihydroxyphenyl)-propan, Hexa-(4-(4-hydroxyphenyl-isopropyl)-phenyl)-orthoterephthalsäureester, Tetra-(4-hydroxyphenyl)-methan, Tetra-(4-(4-hydroxyphenyl-isopropyl)-phenoxy)-methan und 1,4-Bis-(4',4"-dihydroxytriphenyl)-methyl)-benzol sowie 2,4-Dihydroxybenzoesäure, Trimesinsäure, Cyanurchlorid und 3,3-Bis-(3-methyl-4-hydroxyphenyl)-2-oxo-2,3-dihydroindol.

Die Menge der gegebenenfalls einzusetzenden Verzweiger beträgt 0,05 Mol-% bis 2 Mol-%, bezogen wiederum auf Mole an jeweils eingesetzten Diphenolen.

Die Verzweiger können entweder mit den Diphenolen und den Kettenabbrechern in der wäßrig alkalischen Phase vorgelegt werden, oder in einem organischen Lösungsmittel gelöst vor der Phosgenierung zugegeben werden. Im Falle des Umesterungsverfahrens werden die Verzweiger zusammen mit den Diphenolen eingesetzt.

Alle diese Maßnahmen zur Herstellung der Ausgangspolycarbonate sind dem Fachmann geläufig.

Geeignete UV-Absorber sind solche Verbindungen, die auf Grund ihres Absorptionsvermögens unterhalb 400 nm in der Lage sind, Polycarbonat wirksam vor UV-Licht zu schützen.

Geeignete UV-Absorber sind insbesondere solche der Formel (II) 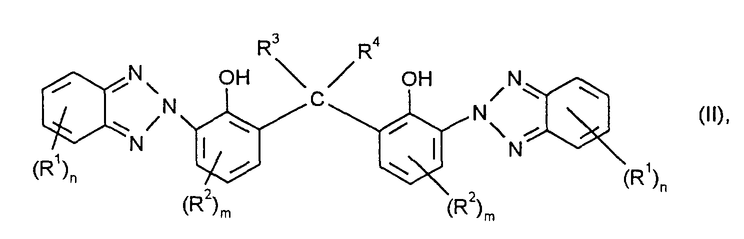 worin
- R¹ und R²: gleich oder verschieden sind und H, Halogen, C₁-C₁₀-Alkyl, C₅-C₁₀-Cycloalkyl, C₇-C₁₃-Aralkyl, C₆-C₁₄-Aryl, -OR⁵ oder -(CO)-O-R⁵ bedeuten, mit R⁵ = H, oder C₁-C₄-Alkyl
- R³ und R⁴: ebenfalls gleich oder verschieden sind und H, C₁-C₄-Alkyl, C₅-C₆-Cycloalkyl, Benzyl oder C₆-C₁₄-Aryl, bedeuten,
- m: 1, 2 oder 3 ist und
- n: 1, 2, 3 oder 4 ist, und
der Formel (III) 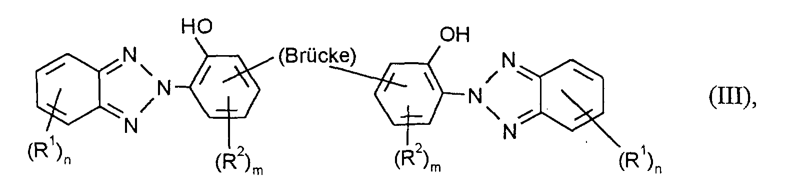 in der 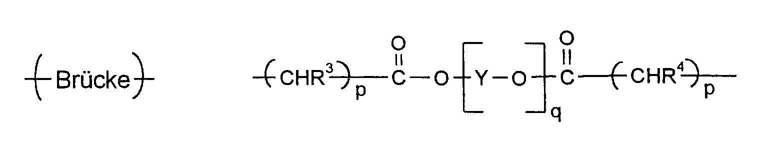 ist, worin
- p: eine ganze Zahl von 0 bis 3 ist,
- q: eine ganze Zahl von 1 bis 10 ist und
- Y: ―CH₂-CH₂―,

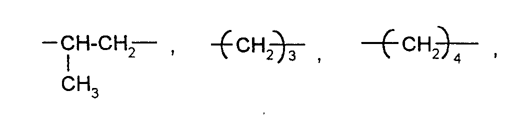

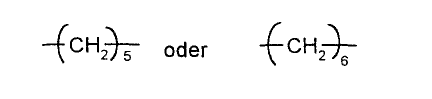

bezeichnet,
wobei es in diesem Fall bevorzugt wird, daß die OH-Gruppe in para-Stellung zu der verbrückenden Gruppe steht. In der vorstehenden Formel sind R¹ und R² unabhängig voneinander ein Wasserstoff- oder ein Halogen-Atom, ein C₁- bis C₁₂-Alkoxy-, C₇- bis C₁₈-Arylalkoxy- oder ein C₁- bis C₁₀-Alkyl-, -Cycloalkyl-, -Aralkyl- oder -Aryl-Rest, und R³ und R⁴ sind unabhängig voneinander ein Wasserstoff-Atom oder ein C₁- bis C₁₀-Alkyl-, -Cycloalkyl-, -Aralkyl- oder -Aryl-Rest, n ist eine ganze Zahl von 0 bis 4, und m ist eine ganze Zahl von 1 bis 3.

Eine bevorzugte Ausführungsform (IIIa) wird durch ein Bis-benzotriazol repräsentiert, in dem (̵Brücke)̵ 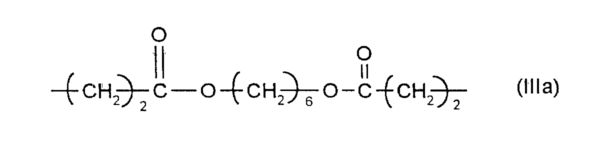 bezeichnet und in para-Stellung zu den OH-Gruppen angeordnet ist und R² tertiäres Butyl in ortho-Stellung zu den Hydroxyl-Gruppen ist.

Geeignete UV-Absorber sind insbesondere auch solche der Formel (IV) 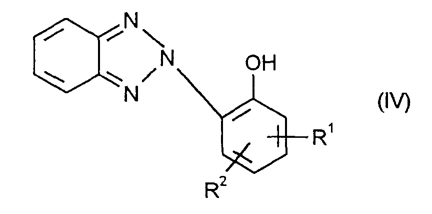 worin
- R¹ und R²: verschiedene oder gleiche C₁-C₁₅-Alkyl-Reste oder Aralkyl-Reste sind, wie tert. Octyl oder Methyl,
der Formel (V), 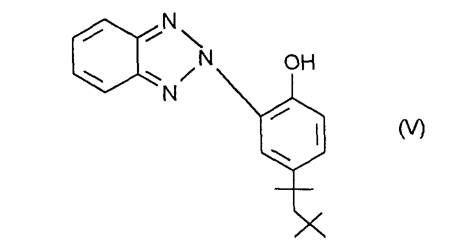 der Formel (VI) 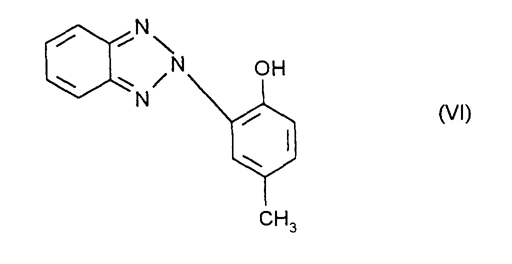 der Formel (VII) 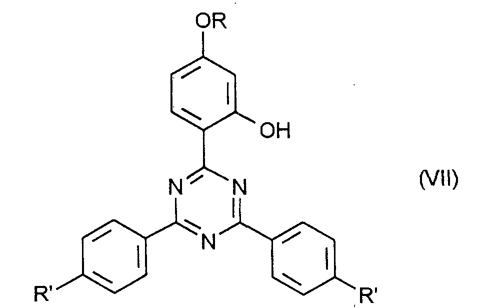 worin
R = H, C₁-C₁₈-Alkyl, durch Halogen oder C₁-C₁₂-Alkoxysubstituiertes C₂-C₆-Alkyl oder Benzyl bedeutet und R' Wasserstoff oder Methyl bedeutet (siehe EP 500 496),
und der Formel (VIII) 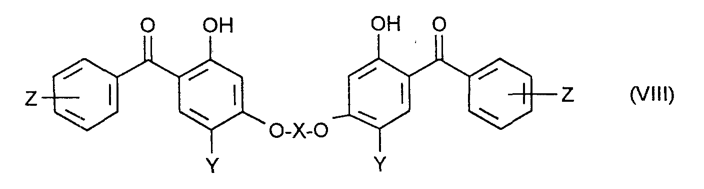 worin
- X=: lineares oder verzweigtes Alkylen mit 1 bis 16 C-Atomen; O-, m- oder p-Xylyl; oder oxoalkandyl der Formel -CH₂-CH₂(O-CH₂-CH₂)ₙ-, -CH₂-CH(CH₃)[OCH₂CH(CH₃)]ₙ- oder -CH₂-CH₂-CH₂-CH₂-(OCH₂CH₂CH₂CH₂) ist, wobei n = 1 bis 4 sein kann,
- Y =: Wasserstoff, lineares oder verzweigtes Alkyl mit 1 bis 18 C-Atomen, und
- Z =: Wasserstoff, Chlor, lineares oder verzweigtes Alkyl von 1 bis 18 C-Atomen oder Alkoxy mit 1 bis 18 C-Atomen sind (siehe US-P 5 306 456).

Die Einarbeitung der UV-Absorber in die Polycarbonate erfolgt in bekannter Weise durch Vermischen von Polycarbonatgranulat mit dem UV-Absorber(n) und anschließende Extrusion oder durch Vermischen der Lösungen der Polycarbonate, beispielsweise in CH₂Cl₂, mit Lösungen der UV-Absorber in den gleichen oder verschiedenen Lösungsmitteln, beispielsweise in Aceton, und anschließende Ausdampfung der Lösungsmittel in bekannter Weise.

Die so hergestellten Polycarbonate können zusätzliche Additive zur Verbesserung der Gleiteigenschaften, wie z.B. Ester mehrwertiger Alkohole mit langkettigen Fettsäuren, wie z.B. Pentaerythrittetrastearat/-palmitat, Glyzerinmonostearat/-palmitat, Glyzerintristearat/-palmitat, enthalten. Weiterhin können die für Polycarbonat bekannten Stabilisatoren wie Phosphine, Phosphite oder Si - haltige Stabilisatoren eingesetzt werden. Außerdem ist der Zusatz von Flammschutzmitteln, Pigmenten, Farbmitteln, fein zerteilten Mineralien und anderen Zuschlagsstoffen möglich.

Mehrschichtige Polycarbonatplatten sind sowohl Massivplatten als auch insbesondere Stegdoppel- oder Stegdreifachplatten sowie Stegprofile und Panele, wobei sowohl eine als auch beide Seiten der Kunststofftafeln mit den UV-absorberhaltigen Schichten versehen sein können.

Die jeweilige Kernschicht der erfindungsgemäßen Polycarbonatplatten kann natürlich auch eine Basismenge an UV-Stabilisatoren enthalten, also beispielsweise 0,1 Gew.-% bis 0,5 Gew.-% bezogen auf das Gewicht der Kernschicht.

Die Coextrusion als solche ist literaturbekannt (siehe beispielsweise EP 110 221 und EP 110 238).

Im vorliegenden Fall wird vorzugsweise wie folgt verfahren: An einem Coextrusionsadapter sind jeweils ein Extruder zur Erzeugung der Kernschicht und pro Deckschicht ein weiterer Extruder angeschlossen. Der Adapter ist so konstruiert, daß die die Deckschichten formenden Schmelzen als dünne Schicht haftend auf die Schmelze der Kernschicht aufgebracht werden.

Der so erzeugte, mehrschichtige Schmelzestrang wird dann in der anschließend angeschlossenen Düse in die gewünschte Form (Tafel oder Stegplatte) gebracht. Anschließend wird in bekannter Weise mittels Kalandrierung (Tafel) oder Vakuumkalibrierung (Stegplatte) die Schmelze unter kontrollierten Bedingungen abgekühlt und anschließend abgelängt. Gegebenenfalls kann nach der Kalibrierung oder Kalandrierung ein Temperofen zur Eliminierung von Spannungen angebracht werden.

Nachträgliche Bearbeitungen, wie z.B. Tiefziehen oder Oberflächenbearbeitungen, wie z.B. die Ausrüstung mit Kratzfestlacken, wasserspreitenden Schichten und ähnliches sind möglich.

Verwendete Maschinen und Apparate für die Beispiele:

Die verwendeten Maschinen und Apparate zur Herstellung von mehrschichtigen Massiv- und Stegplatten werden im folgenden beschrieben.
1. Einrichtung zur Herstellung von coextrudierten Massivplatten
   1.1 Die Einrichtung besteht aus
      - dem Hauptextruder mit einer Schnecke der Länge 33D und einem Durchmesser von 75 mm mit Entgasung,
      - dem Coexadapter (Feedblock-System),
      - einem Coextruder zum Aufbringen der Deckschicht mit einer Schnecke der Länge 25D und einem Durchmesser von 30 mm,
      - der Breitschlitzdüse mit 600 mm Breite,
      - dem Glättkalander mit horizontaler Walzenanordnung, wobei die dritte Walze um 45° gegenüber der Horizontalen schwenkbar ist,
      - der Rollenbahn,
      - der Abzugseinrichtung,
      - der Ablängvorrichtung (Säge),
      - dem Ablagetisch.
   1.2 Durchführung:
      Das Polycarbonat-Granulat des Basismaterials wird dem Fülltrichter des Hauptextruders zugeführt, das UV-Coextrusionsmaterial (Deckschichtmaterial) dem des Coextruders. Im jeweiligen Plastifiziersystem Zylinder/Schnecke erfolgt das Aufschmelzen und Fördern des jeweiligen Materials. Beide Materialschmelzen werden im Coexadapter zusammengeführt und bilden nach Verlassen der Düse und Abkühlen auf dem Glättkalander einen Verbund. Dabei kann die UV-Coexschicht sowohl einseitig als auch auf beiden Seiten der Basisschicht aufgebracht werden. Die weiteren Einrichtungen dienen dem Transport, Ablängen und Ablegen der extrudierten Platten.
      Bei der Herstellung von Plattendicken größer 1 mm gelangt die Schmelze aus der Düse kommend in den Spalt zwischen Walze 1 und 2 und erfährt dort eine Glättung und Abkühlung beidseitig an den Walzenoberflächen. Dazu ist es erforderlich, mit einem geringen Schmelzüberschuß zu arbeiten, der sich im sogenannten Knet oder Wulst vor dem Walzenspalt befindet.
      Bei herzustellenden Platten von < 1 mm Dicke wird die erste Walze außer Betrieb gesetzt, so daß keine Glättung im Walzenspalt stattfindet (Chillrollverfahren).
2. Einrichtung zur Herstellung von coextrudierten Stegplatten
   2.1 Die Einrichtung besteht aus
      - dem Hauptextruder mit einer Schnecke der Länge 33D und einem Durchmesser von 70 mm mit Entgasung,
      - dem Coexadapter (Feedblock-System),
      - einem Coextruder zum Aufbringen der Deckschicht mit einer Schnecke der Länge 25D und einem Durchmesser von 30 mm,
      - der speziellen Breitschlitzdüse mit 350 mm Breite,
      - dem Kalibrator,
      - der Rollenbahn,
      - der Abzugseinrichtung,
      - der Ablängvorrichtung (Säge),
      - dem Ablagetisch.
   2.2 Durchführung
      Das Polycarbonat-Granulat des Hauptmaterials wird dem Fülltrichter des Hauptextruders zugeführt, das UV-Coextrusionsmaterial dem des Coextruders. Im jeweiligen Plastifiziersystem Zylinder/Schnecke erfolgt das Aufschmelzen und Fördern des jeweiligen Materials. Beide Materialschmelzen werden im Coexadapter zusammengeführt und bilden nach Verlassen der Düse und Abkühlen im Kalibrator einen Verbund. Die weiteren Einrichtungen dienen dem Transport, Ablängen und Ablegen der extrudierten Platten.

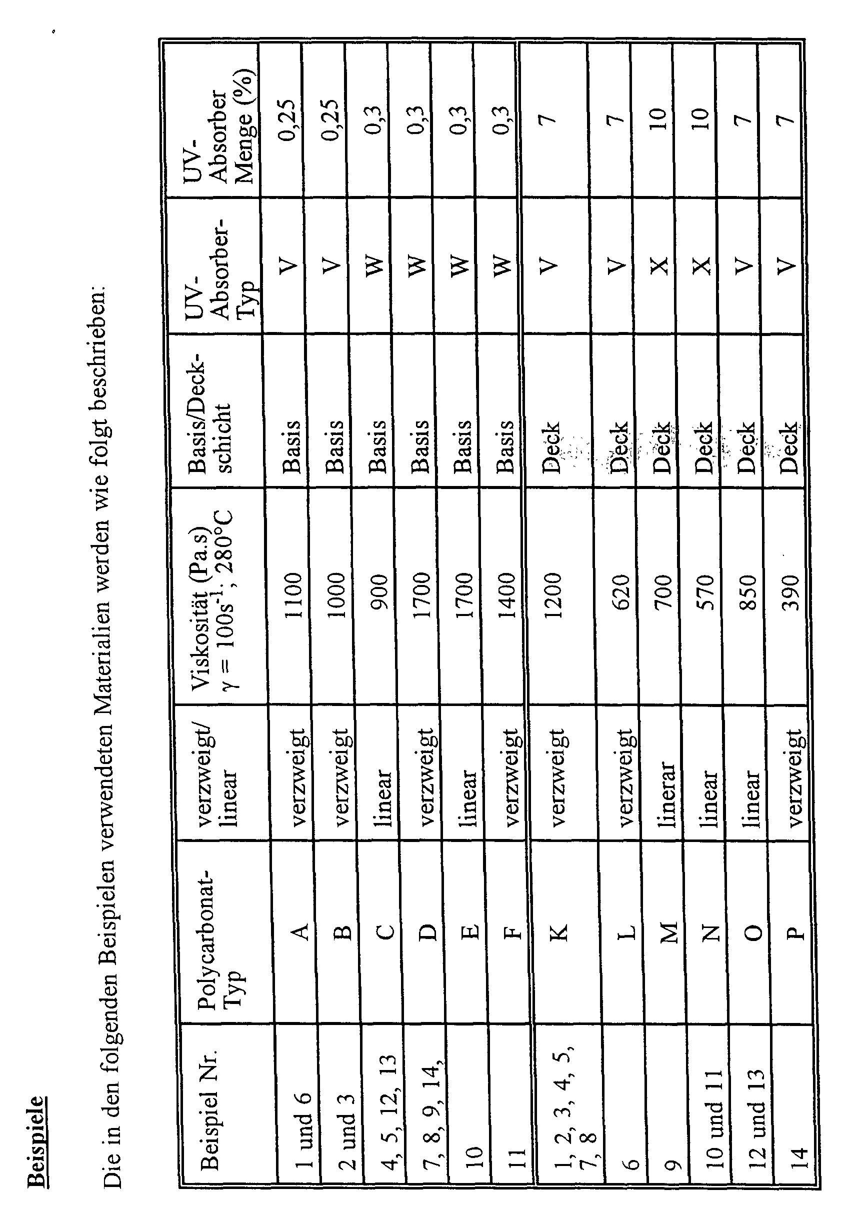

Die Polycarbonate A bis P sind aus 2,2-Bis-(4-hydroxyphenyl)-propan in bekannter Weise nach dem Zweiphasengrenzflächenverfahren hergestellt, wobei als Kettenabbrecher Phenol und gegebenenfalls als Verzweiger Isatinbiskresol eingesetzt wurden.

Die relativen Lösungsviskositäten der Polycarbonate A bis P wurden in bekannter Weise in CH₂Cl₂ bei 25°C und bei einer Konzentration von 0,5 g in 100 ml CH₂Cl₂ gemessen und betragen:

| | | | |
|---|---|---|---|
| Produkt | Lösungsviskosität | Produkt | Lösungsviskosität |
| A | 1,285 | K | 1,315 |
| B | 1,285 | L | 1,265 |
| C | 1,293 | M | 1,300 |
| D | 1,315 | N | 1,295 |
| E | 1,318 | O | 1,292 |
| F | 1,298 | P | 1,243 |

Die eingesetzten UV-Absorber haben die folgende Struktur:

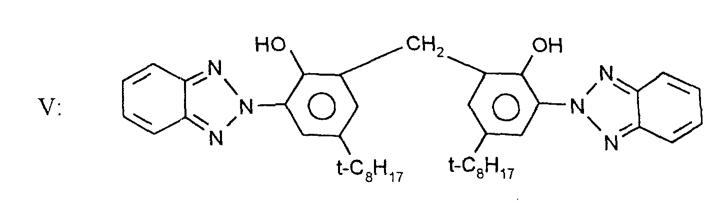

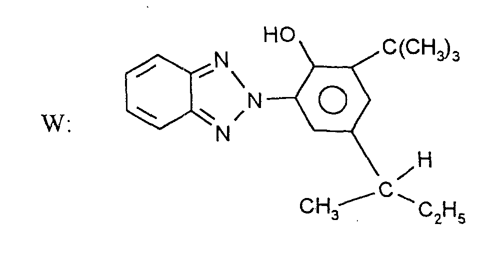

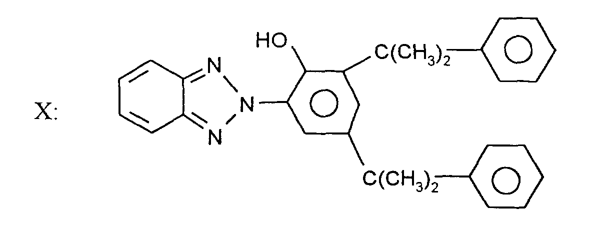

Es sind Handelsprodukte der Ciba AG.

### Vergleichsbeispiele

### Beispiel 1

Mittels einer in Abschnitt 2 beschriebenen Anlage mit Coexadapter wurde eine coextrdierte, 10 mm einseitig UV-geschützte Stegplatte hergestellt. Als Basismaterial der Platte wurde ein schwach verzweigtes Polycarbonat "A" verwendet, dessen Schmelzviskosität bei 280°C C ηₒ = 1100 Pas betrug, wobei eine Schergeschwindigkeit von γ = 100 sec⁻¹ der Viskositäts-Messung zugrunde liegt.

Die Schmelze wurde coextrudiert mit der UV-geschützten PC-Masse "K". Sie enthielt zu 7 Gew.-% den UV-Stabilisator "V". Die Schmelzviskosität der UV-geschützten Masse betrug η = 1200 Pas für 280°C und γ = 100 sec⁻¹. Die Viskositätsdifferenz betrug Δη = +100 Pas.

Die Platte zeigte Fließstörungen im Bereich der UV-Schicht. Diese sind besonders gut im Bereich zwischen den Stegen zu erkennen.

### Beispiel 2 (5 mm-Platte) und Beispiel 3 (1 mm Platte)

Mittels einer in Abschnitt 1 beschriebenen Breyer-Plattenanlage wurden 5 mm und 1 mm (unter Verwendung des Chillroll-Verfahrens) Massivplatten hergestellt. Als Basismaterial wurde Polycarbonat "B" mit einer Schmelzviskosität bei 280°C und γ = 100 sec⁻¹ von ηₒ = 1000 Pas verwendet. Als UV-Coexmaterial wurde wie bei Beispiel 1 Polycarbonat "K" eingesetzt. Die Viskositätsdifferenz betrug Δη = +200 Pas.

Die 5 mm- und 1 mm-Platten zeigten Fließstörungen im Bereich der UV-Schicht.

### Beispiel 4 (5 mm-Platte) und Beispiel 5 (1 mm-Platte)

Mittels einer in Abschnitt 1 beschriebenen Breyer-Plattenanlage wurde 5 mm und 1 mm (unter Verwendung des Chillroll-Verfahrens) Masssivplatten hergestellt. Als Basismaterial wurde Polycarbonat "C" mit einer Schmelzviskosität bei 280°C und γ = 100 sec⁻¹ von ηₒ = 900 Pas verwendet. Als UV-Coexmaterial wurde wie bei Beispiel 1 Polycarbonat "K" eingesetzt. Die Viskositätsdifferenz betrug Δη = +300 Pas.

Die 5 mm- und 1 mm-Platten zeigten Fließstörungen im Bereich der UV-Schicht.

### Ausführungsbeispiele

### Beispiel 6

10 mm Stegplatten wurden mit einer in Abschnitt 2 beschriebenen Anlage hergestellt, wobei als Basismaterial wie bei Beispiel 1 Polycarbonat "A" verwendet wurde. Als UV-Coexmaterial wurde Polycarbonat "L" verwendet. Es enthält 7 Gew.-% UV-Stabilisator "V". Bei 280°C und für γ = 100 sec⁻¹ beträgt die Schmelzviskosität η = 620 Pas (Δη = -480 Pas).

Es konnten fehlerfreie Platten ohne Fließstörungen hergestellt werden.

### Beispiel 7 (5 mm-Platte) und Beispiel 8 (1 mm-Platte)

Die Herstell-Bedingungen der Massivplattenanlage wurden, wie in den Beispielen 2 und 3 beschrieben, gewählt. Basismaterial war ein schwach verzweigtes Polycarbonat "D", dessen Schmelzviskosität bei 280°C und γ = 100 sec⁻¹ ηₒ = 1700 Pas betrug. Zur Coextrusion wurde die UV-Masse "K" eingesetzt. Die Zusammensetzung des Materials ist in Beispiel 1 beschrieb en. Die Differenz der Schmelzviskosität betrug Δη = -500 Pas.

Es konnten fehlerfreie Platten ohne Fließstörungen hergestellt werden.

### Beispiel 9

Gewählt wurden die Herstell-Bedingungen der Stegplattenproduktion aus Polycarbonat "D" wie in Beispiel 7 beschrieben. Als UV-Masse wurde Polycarbonat "M" coextrudiert. Dieses Material enthält 10 Gew.-% des Stabilisators "X". Die Viskosität der Schmelze beträgt bei 280°C und γ = 100 sec⁻¹ η = 700 Pas (Δη = -1000 Pas).

Es konnten Platten ohne Fließstörungen hergestellt werden.

### Beispiel 10

Die Herstell-Bedingungen der Stegplattenanlage wurden wie in Beispiel 6 erwähnt gewählt. Als Basismaterial kann ein lineares Polycarbonat "E" zum Einsatz. Dessen Schmelzviskosität ηₒ betrug 1700 Pas für 280°C und γ = 100 sec⁻¹. Das Material wurde coextrudiert mit Polycarbonat "N", das 10 % UV-Stabilisator "X" enthält. Die Viskosität der UV-Schmelze betrug η = 570 Pas für 280°C und γ = 100 sec⁻¹. (Δη = -1130 Pas).

Es konnten fehlerfreie Platten ohne Fließstörungen produziert werden.

### Beispiel 11

10 mm Stegplatten wurden mit einer in Abschnitt 2 beschriebenen Anlage hergestellt, wobei als Basismaterial Polycarbonat "F" mit einer Schmelzviskosität ηₒ von 1400 Pas für 280°C und γ = 100 sec⁻¹ verwendet wurde. Das UV-Coexmaterial war Polycarbonat "N". Das Material ist in Beispiel 9 beschrieben.

Der Unterschied der Schmelzviskosität beträgt Δη = -830 Pas. Die so hergestellten Platten waren schlierenfrei und ohne Fließstörungen.

### Beispiel 12 (5 mm-Platte) und Beispiel 13 (1 mm-Platte)

Die Herstell-Bedingungen der Massivplattenanlage wurden, wie in den Beispielen 2 und 3 beschrieben, gewählt, wobei als Basismaterial wie bei den Beispielen 4 und 5 Polycarboant "C" verwendet wurde. Zur Coextrusion wurde das UV-Material "O" verwendet, das 7 Gew.-% des UV-Stabilisators "V" enthält. Die Schmelzviskosität η der UV-geschützten Schmelze betrug 850 Pas für 280°C und γ = 100 sec⁻¹ (Δη = -50 Pas).

Die Platte zeigte keine Fließstörungen.

### Beispiel 14

10 mm Stegplatten wurden mit einer in Abschnitt 2 beschriebenen Anlage hergestellt, wobei als Basismaterial das bei Beispiel 7 beschriebene Polycarbonat "D" verwendet wurde. Zur Coextrusion wurde das UV-Material "P" verwendet, das 7 Gew.-% des UV-Stabilisators "V" enthält. Die Schmelzviskosität η der UV-geschützten Schmelze betrug 380 Pas für 280°C und γ = 100 sec⁻¹ (Δη = -1320 Pas).

Die Platte zeigte keine Fließstörungen.

## Patentansprüche

1. UV-geschützte, mehrschichtige Polycarbonatplatten enthaltend
1.1 eine Basisplatte aus thermoplastischem Polycarbonat, das keinen oder > 0 Gew.-% bis 1 Gew.-% UV-Absorber enthält und das eine Viskosität bei 280 °C und bei einer Schergeschwindigkeit von 100 s⁻¹ von 500 Pa.S bis 2500 Pa.S aufweist und mindestens auf einer Seite der Basisplatte
1.2 eine Deckschicht aus thermoplastischem Polycarbonat, das einen Gehalt an UV-Absorber von 2 Gew.-% bis 20 Gew.-% enthält und die eine Viskosität bei 280 °C und bei einer Schergeschwindigkeit von 100 s⁻¹ von 200 Pa.S bis 2300 Pa.S aufweist, **dadurch gekennzeichnet, daß** die Viskosität der Deckschicht 1.2 jeweils mindestens 50 Pa.S geringer ist, als die Viskosität der jeweiligen Basisplattte 1.1,
erhältlich durch Coextrusion, wobei man mit Hilfe eines Coextrusionsadapters die Schmelzstränge des Kernmaterials sowie der Deckschicht zusammenführt und anschließend in einer geschlossenen Düse in die gewünschte Form bringt.

2. Polycarbonatplatten gemäß Anspruch 1, **dadurch gekennzeichnet, daß** die Viskosität der Deckschicht 1.2 jeweils 100 Pa.S bis 2 000 Pa.S geringer ist, erhältlich durch Coextrusion, wobei man mit Hilfe eines Coextrusionsadapters die Schmelzstränge des Kernmaterials sowie der Deckschicht zusammenführt und anschließend in einer geschlossenen Düse in die gewünschte Form bringt.

3. Polycarbonatplatten gemäß Anspruch 1 enthaltend
3.1 die erfindungsgemäße Basisplatte 1.1,
3.2 auf mindestens einer Seite der Basisplatte 1.1 die erfindungsgemäße Deckschicht 1.2 und mindestens
3.3 auf einer von der Basisplatte 1.1 abgewandten Seite der Deckschicht 1.2 eine Schutzschicht aus Polycarbonat, die **dadurch gekennzeichnet ist, daß** sie einen UV-Absorber-Gehalt von 0,1 Gew.-% bis 20 Gew.-%, Viskositäten bei 280 °C und eine Schergeschwindigkeit von 100 s⁻¹ von 200 Pa.S bis 2300 Pa.S und bei einer Dicke von 2 µm bis 100 µm hat, wobei der Unterschied der Viskosität der Schutzschicht 3.3 zur Deckschicht 1.2 jeweils beliebig groß ist oder null Pa.S beträgt,
erhältlich durch Coextrusion, wobei man mit Hilfe eines Coextrusionsadapters die Schmelzstränge des Kernmaterials sowie der Deckschichten zusammenführt und anschließend in einer geschlossenen Düse in die gewünschte Form bringt.

4. Polycarbonatplatten gemäß Anspruch 2 enthaltend
4.1 die erfindungsgemäße Basisplatte 1.1,
4.2 auf mindestens einer Seite der Basisplatte 1.1 die erfindungsgemäße Deckschicht 1.2 und mindestens
4.3 auf einer von der Basisplatte 1.1 abgewandten Seite der Deckschicht 1.2 die Schutzschicht 3.3, wobei wieder der Unterschied der Viskosität der Schutzschicht 3.3 zur Deckschicht 1.2 jeweils beliebig groß ist oder null Pa.S beträgt,
erhältlich durch Coextrusion, wobei man mit Hilfe eines Coextrusionsadapters die Schmelzstränge des Kernmaterials sowie der Deckschichten zusammenführt und anschließend in einer geschlossenen Düse in die gewünschte Form bringt.

5. Verfahren zur Herstellung von UV-geschützten, mehrschichtigen Polycarbonatplatten enthaltend
5.1 eine Basisplatte aus thermoplastischem Polycarbonat, das keinen oder > 0 Gew.-% bis 1 Gew.-% UV-Absorber enthält und das eine Viskosität bei 280 °C und bei einer Schergeschwindigkeit von 100 s⁻¹ von 500 Pa.S bis 2500 Pa.S aufweist und mindestens auf einer Seite der Basisplatte
5.2 eine Deckschicht aus thermoplastischem Polycarbonat, das einen Gehalt an UV-Absorber von 2 Gew.-% bis 20 Gew.-% enthält und die eine Viskosität bei 280 °C und bei einer Schergeschwindigkeit von 100 s⁻¹ von 200 Pa.S bis 2300 Pa.S aufweist, **dadurch gekennzeichnet, daß** die Viskosität der Deckschicht 1.2 jeweils mindestens 50 Pa.S geringer ist, als die Viskosität der jeweiligen Basisplatte 1.1,
durch Coextrusion, **dadurch gekennzeichnet, daß** man mit Hilfe eines Coextrusionsadapters die Schmelzstränge des Kernmaterials sowie der Deckschicht zusammenführt und anschließend in einer geschlossenen Düse in die gewünschte Form bringt.

6. Verfahren gemäß Anspruch 5, wobei die Viskosität der Deckschicht 5.2 jeweils 100 Pa.S bis 2 000 Pa.S geringer ist.

7. Verfahren zur Herstellung von UV-geschützten mehrschichtigen Polycarbonatplatten enthaltend
7.1 die erfindungsgemäße Basisplatte 1.1,
7.2 auf mindestens einer Seite der Basisplatte 1.1 die erfindungsgemäße Deckschicht 1.2 und mindestens
7.3 auf einer von der Basisplatte 1.1 abgewandten Seite der Deckschicht 1.2 eine Schutzschicht aus Polycarbonat, die **dadurch gekennzeichnet ist, daß** sie einen UV-Absorber-Gehalt von 0,1 Gew.-% bis 20 Gew.-%, Viskositäten bei 280 °C und eine Schergeschwindigkeit von 100 s⁻¹ von 200 Pa.S bis 2300 Pa.S und bei einer Dicke von 2 µm bis 100 µm hat, wobei der Unterschied der Viskosität der Schutzschicht 3.3 zur Deckschicht 1.2 jeweils beliebig groß ist oder null Pa.S beträgt,
durch Coextrusion, **dadurch gekennzeichnet, daß** man mit Hilfe eines Coextrusionsadapters die Schmelzstränge des Kernmaterials sowie der Deckschichten zusammenführt und anschließend in einer geschlossenen Düse in die gewünschte Form bringt.

8. Verfahren zur Herstellung von UV-geschützten mehrschichtigen Polycarbonatplatten enthaltend
8.1 die erfindungsgemäße Basisplatte 1.1,
8.2 auf mindestens einer Seite der Basisplatte 1.1 die erfindungsgemäße Deckschicht 1.2 und mindestens
8.3 auf einer von der Basisplatte 1.1 abgewandten Seite der Deckschicht 1.2 die Schutzschicht 3.3, wobei wieder der Unterschied der Viskosität der Schutzschicht 3.3 zur Deckschicht 1.2 jeweils beliebig groß ist oder null Pa.S beträgt.
durch Coextrusion, **dadurch gekennzeichnet, daß** man mit Hilfe eines Coextrusionsadapters die Schmelzstränge des Kernmaterials sowie der Deckschichten zusammenführt und anschließend in einer geschlossenen Düse in die gewünschte Form bringt.

## Revendications

1. Panneaux multicouches à base de polycarbonate protégés contre le rayonnement ultraviolet, contenant
1.1 un panneau de base constitué par du polycarbonate thermoplastique qui ne contient pas d'absorbant du rayonnement ultraviolet ou qui en contient à concurrence de > 0 % en poids à 1 % en poids et qui présente une viscosité à 280 °C et à une vitesse de cisaillement de 100 s⁻¹ de 500 Pa.S à 2500 Pa.S, et au moins sur un côté du panneau de base,
1.2 une couche de recouvrement constituée d'un polycarbonate thermoplastique qui possède une teneur en absorbant du rayonnement ultraviolet de 2 % en poids à 20 % en poids et qui présente une viscosité à 280 °C et à une vitesse de cisaillement de 100 s⁻¹ de 200 Pa.S à 2300 Pa.S, **caractérisés en ce que** la viscosité de la couche de recouvrement 1.2 est respectivement inférieure d'au moins 50 Pa.S à la viscosité du panneau de base respectif 1.1,
que l'on obtient par coextrusion dans laquelle, à l'aide d'un adaptateur de la coextrusion, on guide de manière conjointe les boudins en fusion de la matière de la partie centrale et de la couche de recouvrement et on les amène ensuite à la forme désirée dans une filière fermée.

2. Panneaux à base de polycarbonate selon la revendication 1, **caractérisés en ce que** la viscosité de la couche de recouvrement 1.2 est inférieure respectivement de 100 Pa.S à 2000 Pa.S, ladite couche étant obtenue par coextrusion dans laquelle, à l'aide d'un adaptateur de la coextrusion, on guide de manière conjointe les boudins en fusion de la matière de la partie centrale et de la couche de recouvrement et on les amène ensuite à la forme désirée dans une filière fermée.

3. Panneaux à base de polycarbonate selon la revendication 1, contenant
3.1 le panneau de base 1.1 selon l'invention,
3.2 sur au moins un côté du panneau de base 1.1, la couche de recouvrement 1.2 selon l'invention et au moins
3.3 sur un côté de la couche de recouvrement 1.2 se détournant du panneau de base 1.1, une couche de protection constituée de polycarbonate, qui se **caractérise en ce qu'**elle possède une teneur en absorbant du rayonnement ultraviolet de 0,1 % en poids à 20 % en poids, des viscosités à 280 °C et à une vitesse de cisaillement de 100 s⁻¹ de 200 Pa.S à 2300 Pa.S et à une épaisseur de 2 µm à 100 µm, la différence entre la viscosité de la couche de protection 3.3 et celle de la couche de recouvrement 1.2 possédant respectivement n'importe quelle valeur ou encore s'élevant à zéro Pa.S,
que l'on obtient par coextrusion dans laquelle, à l'aide d'un adaptateur de la coextrusion, on guide de manière conjointe les boudins en fusion de la matière de la partie centrale et des couches de recouvrement et on les amène ensuite à la forme désirée dans une filière fermée.

4. Panneaux à base de polycarbonate selon la revendication 2, contenant
4.1 le panneau de base 1.1 selon l'invention,
4.2 sur au moins un côté du panneau de base 1.1, la couche de recouvrement 1.2 selon l'invention et au moins
4.3 sur un côté de la couche de recouvrement 1.2 se détournant du panneau de base 1.1, la couche de protection 3.3, la différence entre la viscosité de la couche de protection 3.3 et celle de la couche de recouvrement 1.2 possédant à nouveau respectivement n'importe quelle valeur ou s'élevant à nouveau à zéro Pa.S,
que l'on obtient par coextrusion dans laquelle, à l'aide d'un adaptateur de la coextrusion, on guide de manière conjointe les boudins en fusion de la matière de la partie centrale et des couches de recouvrement et on les amène ensuite à la forme désirée dans une filière fermée.

5. Procédé de fabrication de panneaux multicouches à base de polycarbonate protégés contre le rayonnement ultraviolet, contenant
5.1 un panneau de base constitué par du polycarbonate thermoplastique qui ne contient pas d'absorbant du rayonnement ultraviolet ou qui en contient à concurrence de > 0 % en poids à 1 % en poids et qui présente une viscosité à 280 °C et à une vitesse de cisaillement de 100 s⁻¹ de 500 Pa.S à 2500 Pa.S, et au moins sur un côté du panneau de base,
5.2 une couche de recouvrement constituée d'un polycarbonate thermoplastique qui possède une teneur en absorbant du rayonnement ultraviolet de 2 % en poids à 20 % en poids et qui présente une viscosité à 280 °C et à une vitesse de cisaillement de 100 s⁻¹ de 200 Pa.S à 2300 Pa.S, **caractérisés en ce que** la viscosité de la couche de recouvrement 1.2 est respectivement inférieure d'au moins 50 Pa.S à la viscosité du panneau de base respectif 1.1,
par coextrusion, **caractérisé en ce que**, à l'aide d'un adaptateur de la coextrusion, on guide de manière conjointe les boudins en fusion de la matière de la partie centrale et de la couche de recouvrement et on les amène ensuite à la forme désirée dans une filière fermée.

6. Procédé selon la revendication 5, dans lequel la viscosité de la couche de recouvrement 5.2 est inférieure respectivement de 100 Pa.S à 2000 Pa.S.

7. Procédé de fabrication de panneaux multicouches à base de polycarbonate protégés contre le rayonnement ultraviolet, contenant
7.1 le panneau de base 1.1 selon l'invention,
7.2 sur au moins un côté du panneau de base 1.1, la couche de recouvrement 1.2 selon l'invention et au moins
7.3 sur un côté de la couche de recouvrement 1.2 se détournant du panneau de base 1.1, une couche de protection constituée de polycarbonate qui se **caractérise en ce qu'**elle possède une teneur en absorbant du rayonnement ultraviolet de 0,1 % en poids à 20 % en poids, des viscosités à 280 °C et à une vitesse de cisaillement de 100 s⁻¹ de 200 Pa.S à 2300 Pa.S et à une épaisseur de 2 µm à 100 µm, la différence entre la viscosité de la couche de protection 3.3 et celle de la couche de recouvrement 1.2 possédant respectivement n'importe quelle valeur ou encore s'élevant à zéro Pa.S,
par coextrusion, **caractérisé en ce que**, à l'aide d'un adaptateur de la coextrusion, on guide de manière conjointe les boudins en fusion de la matière de la partie centrale et des couches de recouvrement et on les amène ensuite à la forme désirée dans une filière fermée.

8. Procédé de fabrication de panneaux multicouches à base de polycarbonate protégés contre le rayonnement ultraviolet, contenant
8.1 le panneau de base 1.1 selon l'invention,
8.2 sur au moins un côté du panneau de base 1.1, la couche de recouvrement 1.2 selon l'invention et au moins
8.3 sur un côté de la couche de recouvrement 1.2 se détournant du panneau de base 1.1, la couche de protection 3.3, la différence entre la viscosité de la couche de protection 3.3 et celle de la couche de recouvrement 1.2 possédant à nouveau respectivement n'importe quelle valeur ou s'élevant à nouveau à zéro Pa.S,
que l'on obtient par coextrusion dans laquelle, à l'aide d'un adaptateur de la coextrusion, on guide de manière conjointe les boudins en fusion de la matière de la partie centrale et des couches de recouvrement et on les amène ensuite à la forme désirée dans une filière fermée.

## Claims

1. UV-protected, multilayer polycarbonate sheets, containing
1.1 a base sheet of thermoplastic polycarbonate which contains no UV absorber or > 0 % by weight to 1 % by weight of UV absorber and which has a viscosity at 280°C and at a shear rate of 100 s⁻¹ of 500 Pa.S to 2500 Pa.S, and which has, on at least one side of the base sheet,
1.2 an outer layer of thermoplastic polycarbonate, which has a content of UV absorber of 2 % by weight to 20 % by weight and which has a viscosity at 280°C and at a shear rate of 100 s⁻¹ of 200 Pa.S to 2300 Pa.S, **characterised in that** the viscosity of the outer layer 1.2 is at least 50 Pa.S lower in each case than the viscosity of the respective base sheet 1.1,
and obtainable by coextrusion, wherein molten lengths of the core material and of the outer layer are brought together by means of a coextrusion adapter and are subsequently formed into the desired shape in a closed extrusion die.

2. Polycarbonate sheets according to claim 1, **characterised in that** the viscosity of the outer layer 1.2 is 100 Pa.S to 2000 Pa.S lower in each case, which are obtainable by coextrusion, wherein molten lengths of the core material and of the outer layer are brought together by means of a coextrusion adapter and are subsequently formed into the desired shape in a closed extrusion die.

3. Polycarbonate sheets according to claim 1, containing
3.1 the base sheet 1.1 according to the invention,
3.2 the outer layer 1.2 according to the invention on at least one side of the base sheet 1.1, and at least
3.3 on a side of the outer layer 1.2 facing away from the base sheet 1.1, a protective layer of polycarbonate, which is **characterised in that** it has a UV absorber content of 0.1 % by weight to 20 % by weight, viscosities at 280°C and at a shear rate of 100 s⁻¹ of 200 Pa.S to 2300 Pa.S, and a thickness of 2 µm to 100 µm, wherein the difference in viscosity between the protective layer 3.3 and the outer layer 1.2 is of arbitrary magnitude in each case or is zero Pa.S,
and obtainable by coextrusion, wherein molten lengths of the core material and of the outer layers are brought together by means of a coextrusion adapter and are subsequently formed into the desired shape in a closed extrusion die.

4. Polycarbonate sheets according to claim 2, containing
4.1 the base sheet 1.1 according to the invention,
4.2 the outer layer 1.2 according to the invention on at least one side of the base sheet 1.1, and, at least
4.3 on one side of the outer layer 1.2 facing away from the base sheet 1.1, the protective layer 3.3, wherein the difference in viscosity between the protective layer 3.3 and the outer layer 1.2 is again of arbitrary magnitude or is zero Pa.S in each case,
and obtainable by coextrusion, wherein molten lengths of the core material and of the outer layers are brought together by means of a coextrusion adapter and are subsequently formed into the desired shape in a closed extrusion die.

5. A process for producing UV-protected, multilayer polycarbonate sheets, containing
5.1 a base sheet of thermoplastic polycarbonate which contains no UV absorber or > 0 % by weight to 1 % by weight of UV absorber and which has a viscosity at 280°C and at a shear rate of 100 s⁻¹ of 500 Pa.S to 2500 Pa.S, and which has, on at least one side of the base sheet,
5.2 an outer layer of thermoplastic polycarbonate, which has a content of UV absorber of 2 % by weight to 20 % by weight and which has a viscosity at 280°C and at a shear rate of 100 s⁻¹ of 200 Pa.S to 2300 Pa.S, **characterised in that** the viscosity of the outer layer 1.2 is at least 50 Pa.S lower in each case than the viscosity of the respective base sheet 1.1,
by coextrusion, **characterised in that** molten lengths of the core material and of the outer layer are brought together by means of a coextrusion adapter and are subsequently formed into the desired shape in a closed extrusion die.

6. A process according to claim 5, wherein the viscosity of the outer layer 5.2 is 100 Pa.S to 2000 Pa.S lower in each case.

7. A process for producing UV-protected, multi-layer polycarbonate sheets, containing
7.1 the base sheet 1.1 according to the invention,
7.2 the outer layer 1.2 according to the invention on at least one side of the base sheet 1.1, and at least
7.3 on a side of the outer layer 1.2 facing away from the base sheet 1.1, a protective layer of polycarbonate, which is **characterised in that** it has a UV absorber content of 0.1 % by weight to 20 % by weight, viscosities at 280°C and at a shear rate of 100 s⁻¹ of 100 Pa.S to 2300 Pa.S, and a thickness of 2 µm to 200 µm, wherein the difference in viscosity between the protective layer 3.3 and the outer layer 1.2 is of arbitrary magnitude in each case or is zero Pa.S,
by coextrusion, **characterised in that** molten lengths of the core material and of the outer layers are brought together by means of a coextrusion adapter and are subsequently formed into the desired shape in a closed extrusion die.

8. A process for producing UV-protected, multi-layer polycarbonate sheets, containing
8.1 the base sheet 1.1 according to the invention,
8.2 the outer layer 1.2 according to the invention on at least one side of the base sheet 1.1, and, at least
8.3 on one side of the outer layer 1.2 facing away from the base sheet 1.1, the protective layer 3.3, wherein the difference in viscosity between the protective layer 3.3 and the outer layer 1.2 is again of arbitrary magnitude or is zero Pa.S in each case,
by coextrusion, **characterised in that** molten lengths of the core material and of the outer layers are brought together by means of a coextrusion adapter and are subsequently formed into the desired shape in a closed extrusion die.
